# EUROPEAN PATENT APPLICATION

(11) **EP 2 711 830 A1**
(43) Date of publication of application: **26.03.2014**
(21) Application number: 12306162.4
(22) Date of filing: 25.09.2012
(51) Int. Cl.: G06F 3/12

(54) **Process for archiving a print data stream from a software application to a printing device**

(71) Applicant: Archivezen, 92140 Clamart (FR)
(72) Inventor: Bordier, Jérémie, 75017 Paris (FR); Gerlic, Alexandre, 92140 Clamart (FR)
(74) Representative: Louiset, Raphael

(57) **Abstract**

Process for archiving a print data stream destined, from a software application, to a printing device comprising:
- a duplication step of the print data stream;
- an analysis step of the duplicated print data stream for extracting predefined information therefrom;
- a creation step of a documentindexed with at least an extracted information;
in the process, the duplication step of the print data stream occurs before the reception of the print data stream by the spooler of the printing device and the process further comprises a storing step of the created document.

## Description

### FIELD OF THE INVENTION

The present invention relates generally to the archiving of electronic documents and more particularly to the archiving in a secured way of electronic documents destined to be printed.

### BACKGROUND OF THE INVENTION

Archiving systems are known in the art. Such archiving systems are used by people to keep an electronic file from a document. Archiving systems comprise, in general, steps of scanning document, find information to use as key words in order to identify the document, and index the document in storage zones.

It is known from the document WO 2011075474 (WASAU FINANCIAL SYSTEMS, INC.) a capture system that captures contents of documents from different formats to integrate it in an Enterprise Content Management (ECM) platform. Documents from different formats and containing different kinds of information are scanned with the apparatus. During the scanning step, information are picked up from the document and used to index it. When the scan step and the indexationare finished, the electronic document is sent to the ECM to be available for other people wanting to use it.

Unfortunately, this apparatus does not work with electronic documents and needs concrete documents, such as paper. In that case, if a person needs to index, in the ECM, the document that he or she made on a computer, he or she will have to print it in order to use the capture system for indexing the document in the ECM. This operation takes time and waste paper. Nowadays, for ecologic reasons, electronic supports tend to replace concrete supports, thus, such a capture system is not eco friendly and needs concrete documents to work.

It is also known, from the document EP 1314084 (OCE Printing Systems), a method for archiving print data streams which are emitted by a computer. In this method, a computer generates a print job. The generated print job can be sent to an archiving server or to a print server. The print job can also be sent to both the print server and to the archiving server at the same time. When the print job is sent to the archiving system, a program creates three data sets to index the print job. Then the print job containing the indexation is stored in the storage unit. Such an indexation allows the user to search and find a document easily after the storage. When the print job is sent to the print server, it isdirectly redirected to printers. It is an option to connect the archiving system to the print server in order to store a copy of printed data.

Another configuration is possible, in which it is a host that generates the print job. In this case, the print job is sent to a printer directly connected to the host. As it is done when the print job is created by a computer, the print job can be sent to the archiving server at the same time than it is sent to the printer.

Unfortunately, because the print job can be sent to the print server without being sent to the archiving server, there is no automatic archiving of the print job. This implies that if the document from which the print job is issued has to be re-printed, a new print job has to be generated. Another drawback is the lack of security in storage. Indeed, if there is a disconnection between the computer or the host and the archiving server, the file cannot be stored and the print job is lost. The only way to re-print the document from which the print job is issued is, as described earlier, to generate a new print job.

Moreover, in bad circumstances, there could be an impossibility to reprint a document. This impossibility is due to a failure of the archiving step combined to a loss of the source file. As there is no source file and no print job archived, it is not possible to copy a preceding print and to have a similar document as the first one, a new source file must be done.

### SUMMARY OF THE INVENTION

It is an object of the invention toprovide a method for archiving electronic documents which is invisible for computer users.

It is another object of the invention to secure archiving print jobs.

It is another object of the invention to automatically archive data destined to be printed.

It is another object of the invention to easily find an archived data.

The invention providesa process for archiving a print data stream destined, from a software application, to a printing device comprising:
- a duplication step of the print data stream;
- an analysis step of the duplicated print data stream for extracting predefined information therefrom;
- a creation step of a document indexed with at least an extracted information;
in the process, the duplication step of the print data stream occurs before the reception of the print data stream by the spooler of the printing device and the process further comprises a storing step of the created document.

According to various embodiments, possibly combined:
- the duplication step is subsequent to a printing order;
- the data stream is from a bill;
- the extracted information are at least one of the following list comprising:
   - client's name;
   - client's reference;
   - creation's date of the document;
   - amount of the bill;
- the storing step comprises
   - temporarily storing the created document in a user terminal;
   - transferring the temporarily stored created document to a distant database;
- the transferring step is done toward a plurality of databases;
- the created document is a Portable Document File;
- the process further comprises a searching step within stored documents in at a least a database.

The invention also provides a system for archiving a print data stream destined from a software application to a printing device comprising:
- means for duplicating the print data stream;
- means for analyzing the duplicated print data stream for extracting predefined information therefrom;
- means for creating a document indexed with at least an extracted information;
in the system the means for duplicating the print data stream are configured to duplicate the print data stream before its reception by the spooler of the printing device.

According to various embodiments, possibly combined:
- the means for analyzing the duplicated print data stream are configured to extract client's name, client's reference, creation's date of the document, amount of the bill therefrom.
- the system further comprises at least a database for storing the created document.

The above and other objects and advantages of the invention will become apparent from the detailed description of preferred embodiments, considered in conjunction with the accompanying drawings.

### BRIEF DESCRIPTION OF THE DRAWINGS

**FIG.1** is a diagram showing interactionsthat offers the print data stream archiver.
**FIG.2** is a diagram showing the different steps for archiving.

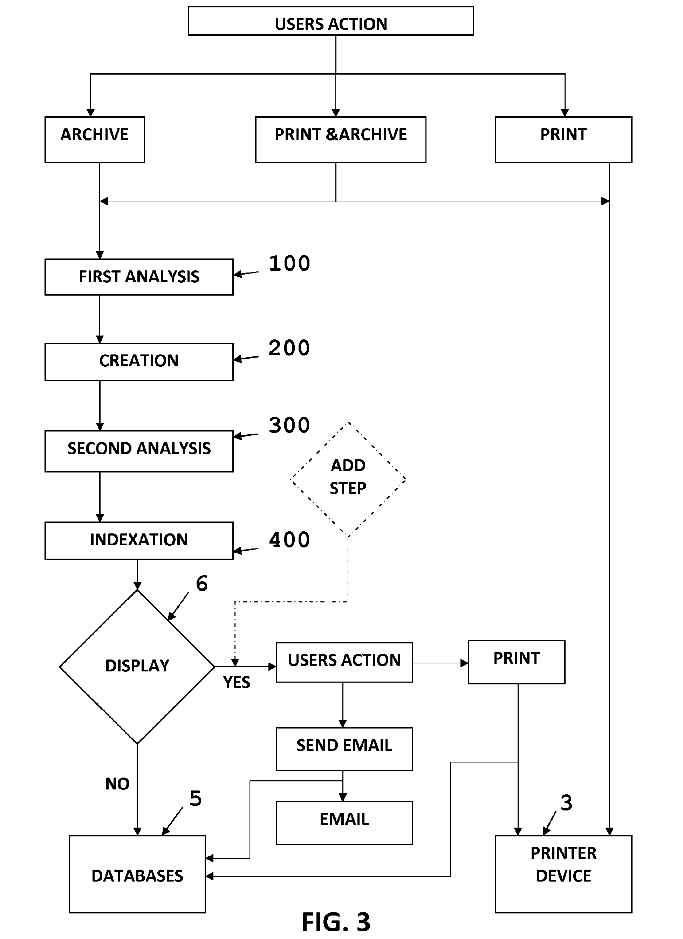

**FIG.3** is diagram showing the print stream archiver role.

### DETAILED DESCRIPTION

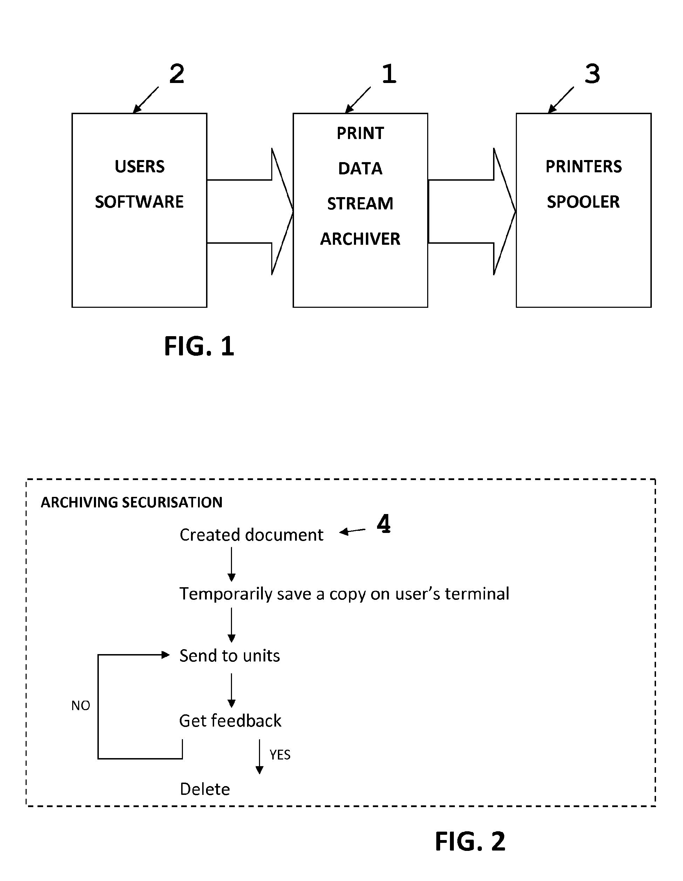

Figure 1 is a diagram showing interactions that offers the print data stream archiver 1 in a process of archiving a print data stream destined from a software 2 to a printing device 3. In a preferred embodiment, the print data stream archiver 1 is used in hotel business. As it will be developed hereinafter, it permits the users to store a bill while edited to be printed. The description hereinafter is based on the hotel business configuration but the print data stream archiver 1 could be used in other domains that need to archive print data stream. The description is also based on a particular use. In this use, the bill is automatically stored when it is sent to the printer device **3.**

The print data stream archiver **1** is located between the user's software **2** and the spooler of the printer device **3.** The process of printingdata stream archiving comprises a duplication step of the print data stream, a first analysis step **100,** a creation step **200** of a document **4** to be archived and a second analysis step **300** of the created document **4** for extracting predefined information therefrom and an indexation step **400** of the created document **4** with at least an extracted information. The duplication step occurs before the reception of the print data stream by the spooler of the printing device **3.** The fact that the duplication step occurs before the reception of the print data stream by the spooler of the printer device **3** allows processing the analysis steps **100, 300** and the creation step **200** while the printing occurs.

In an advantageous embodiment, the print data stream is duplicated in two streams but it could be divided in more than two, for example three or four streams.

However another embodiment comprises a step by step process. Indeed, the analysis **100, 300** and creation step **200** occurs before the printing step or, conversely, after the printing step.

Moreover the first analysis step **100** and the creation step **200** are not successive. The first analysis step **100** happens directly after or during the duplication and before the printing step and the creation step **200** happens after the printing step. The indexation step **400** occurs after the second analysis step **300** because the indexation step **400** of the created document **4** uses the information extracted during the second analysis step **300,** but the creation step **200** happens indirectly after the first analysis step **100.**

The document created **4** is a Portable Document File. More precisely, it is a PDF/A, dedicated to archiving. In another embodiment, the format of the created document **4** is one of the many formats used in archiving process.

The process of archiving a print data stream is engaged automatically when the user clicks on the printing button on the hotel business software **2.**

In another embodiment, it is a manual mode. In this case, each time the user clicks on the printing button, a dialog box appears to ask which option to choose.The user selects one option between print, archive or both at the same time.

In another embodiment, when the print data stream archiver **1** is installed on the user's computer, one configuration is chosen to automatically archive or automatically print the print data stream.

In the hotel business, print data streams are mostly bills. In this case the printer devices are numerous, that implies that bill formats are numerous too such as, for example, receipts or A4 format. In this case it is an advantage to analyze the print data stream before that the spooler gives the data the location of the information on the physical support on which they are being printed. Indeed, the information is easily findable in the stream emitted by the software **2** because it is raw data. After the spooler of the printer device **3,** the stream contains raw data and information about the location of the information on the physical support which are specific for each printer device. In this way, the analysis it is a possibility to print bills on different printer device or change a printer device without changing settings of the print data stream archiver **1.**

The second analysis step **300** is, so, done on the created document **4** and consists in extracting at least one of the following information:
- client's name;
- client's reference;
- creation's date of the document:
- amount of the bill.

This list is non limitedand refers to the hotel business. The list of extracted information isdetermined by business rules and is different for each business. That means in two different businesses, the list of information to extract will be different. In another embodiment, for example in the case of a document from a CAD nomenclature, the extracted information could be one of the following:
- project's name;
- project's deadline;
- project's chief;
- elements references;
- elements supplier.

The indexation step **400** uses the information extracted during the second analysis step **300.** There is a need to index the document **4** created to find it later. Indeed, users can have to reprint a bill for accountancy service, for a client or because of a lost of the original one. So, the user need to have possibility to find the document **4** created easily. To meet this need, the process of print data stream archiving includes a storing step of the document created **4.**

The storing step comprises:
- storing temporarily the document created on the user terminal;
- transferring the temporarily stored created document to a distant database.

In an advantageous embodiment, the storage is done on several databases **5** and more precisely, on three databases **5.** The aim of the triple storage is to secure the storage and to be sure it will be possible to find a document **4.** The storage is developed as explained thereinafter. First, the created document **4** is saved on the user terminal. Then the created document **4** is sent to the three databases **5.** While receiving the document **4,** each database **5** emits a feedback signal to inform the user terminal that the document **4** is well stored. Once each database 5 emitted the feedback signal, the document **4** saved on the user terminal is deleted. The created document **4** can also be displaced in a file on the user's computer, depending on the client's needs. If anyone of the databases **5** does not emit a feedback signal, the document **4** saved on the user terminal cannot be deleted. In that way, it is sure the document **4** is saved and can be findable.

When a database **5** does not emit feedback signal, the created document **4** is sent again until the feedback signal would be emitted. After a predefined time, which is determined by the user, an alert is given to intervene and fix the problem.

Another embodiment would be to use only two databases **5** or, contrary, more than three, but in the case of only one database **5,** there is no security of the storage. Indeed if the database **5** fails the document **4** stored on is lost and it is impossible to find a bill. Moreover, to secure the storage, the created document **4** stored on the user terminal could be deleted with only two feedback signal. The number of two databases **5** is the minimum because it implies that if one database **5** fails, the document **4** is still stored on the second database **5.**

It is then possible for the user to find a document **4** stored. The user has to enter, in a dialog box, the key words corresponding to the list on extracted information during the second analysis step **300.** The user can enter at least one key word to find the document **4.** The browse occurs in at least one database **5** to give at least a result to the user. To refine a search, the user can enter several key words and the combination of these key words will reduce the number of results to the possibility to have only one result. It is also possible for the user to enter any word from the bill. Indeed, the entire content of the document **4** is indexed.

The process explained before is used by a system comprising means configured to duplicate the print data stream, means configured to analyze the duplicated print data stream, means to create a document **4** to be archived, means to analyze the created document **4** and extract predefined information therefrom, means to index the created document with at least an extracted information and means to archive the created and indexed document. The means to duplicate the print data stream are configured to duplicate the print data stream before its reception by the spooler of the printer device **3.**

The means to analyze and extract information from the duplicated print data stream are configured to extract client's name, client's reference, creation's date of the document **4,** amount of the bill therefrom.

In a preferred embodiment, the process occurs as explained hereinafter. First, the user clicks on the print button. This operation releases the duplication step. The print data stream emitted by the software is duplicated to be sent to the spooler of the printer device3, in one hand, and to the archiving process in the second hand. The first stream is printed by the printer device while the second is used by the analyzing step. In the first analysis step **100,** the stream is read and analyzed, a first time, to create a document **4** to be archived. Then the document is used to be analyzed, a second time, in the second analysis step **300,** and information are extracted therefrom. The created document **4** is, then, indexed with the information extracted during the second analysis step **300** and is then ready to be stored. The storage step comprises first an action of saving temporarily the created document **4** on the user terminal and then sent it to the three different databases **5.** When receiving the file, each database **5** emits a feedback signal to the user terminal. When the terminal receives three signals, it deletes the document **4** temporarily stored.

In another embodiment, the printing step is replaced by an email sending step. In this case, the bill is not printed but sent to a mail box. The email is archived if the user clicks the option to archive it.

In another embodiment, after the indexation step **400** and before the archiving step, the created document **4** is sent to a display **6,** for example ascreen, a touch screen, a numeric tablet, a phone or any other displayer. The user can, then, use an add something to the document, for example, sign up from the client, and then archive it and send it by mail or print it.

## Claims

1. Processfor archiving a print data stream destined,from a software **(2)** application, to a printing device **(3)** comprising:
- a duplication step of the print data stream;
- an analysis step **(300)** of the duplicated print data stream for extracting predefined information therefrom;
- a creation step of a document **(4)** indexed with at least an extracted information;
wherein:
- the duplication step of the print data stream occursbefore the reception of the print data stream by the spooler of the printing device **(3)** and the process further comprises a storing step of the created document **(4).**

2. Process as claimed in claim 1 wherein the duplication step is subsequent to a printing order.

3. Process as claimed in any of the preceding claims, wherein the data stream is from a bill.

4. Process as claimed in any of the preceding claims, wherein the extracted information areat least one of the following list comprising:
- client's name;
- client's reference;
- creation's date of the document;
- amount of the bill.

5. Process as claimed in any of the preceding claims, wherein the storing step comprises
- temporarily storing the created document in a user terminal;
- transferring the temporarily stored created document **(4)** to a distant database **(5).**

6. Process as claimed in claim 5, wherein the transferring step is done toward a plurality of databases **(5).**

7. Process as claimed in any of the preceding claims, wherein the created document **(4)** is a Portable Document File.

8. Process as claimed in any of the preceding claims, further comprising a searching step within stored documents in at a least one database **(5).**

9. System for archiving a print data stream from a software **(2)** application to a printing device **(3),** said system comprising:
- means for duplicating the print data stream;
- means for analyzing the duplicated print data stream for extracting predefined information therefrom;
- means for creating a document **(4)** indexed with at least an extracted information;
wherein:
- the means for duplicating the print data stream are configured to duplicate the print data stream before its reception by the spooler of the printing device;

10. System as claimed in claim 9, wherein the means for analyzing the duplicated print data stream are configured to extract client's name, client's reference, creation's date of the document, amount of the bill therefrom.

11. System as claimed in claim 9 or 10, further comprising at least a database **(5)** for storing the created document **(4).**
